# EUROPEAN PATENT APPLICATION

(11) **EP 3 902 032 A1**
(43) Date of publication of application: **27.10.2021**
(21) Application number: 19898780.2
(22) Date of filing: 13.11.2019
(51) Int. Cl.: H01M 4/131, H01M 10/052, H01M 2/02, H01M 2/10

(54) **LITHIUM SECONDARY BATTERY**

(30) Priority: 18.12.2018 JP 2018236549
(71) Applicant: NGK Insulators, Ltd., Nagoya-shi, Aichi 467-8530 (JP)
(72) Inventor: HIBINO, Masahiko, Nagoya-shi, Aichi 467-8530 (JP); MIZUKAMI, Syunsuke, Nagoya-shi, Aichi 467-8530 (JP); NAKANISHI, Takahiro, Nagoya-shi, Aichi 467-8530 (JP); FUJITA, Yuuki, Nagoya-shi, Aichi 467-8530 (JP)
(74) Representative: Müller-Boré & Partner Patentanwälte PartG mbB
(86) International application number: PCT/JP2019/044550
(87) International publication number: WO 2020/129481

(57) **Abstract**

A lithium secondary cell (1) includes a cell case (6) that includes a covering region (67) and an outer peripheral region (68). The covering region (67) is a rectangular region overlaid on the positive electrode (2), the separator (4), and the negative electrode (3) in a direction of superposition. The outer peripheral region (68) is a rectangular frame-like region surrounding the covering region (67). The outer peripheral region (68) includes first regions (681) that are band-like regions extending respectively along a pair of long sides (691). In the first regions (681), a first sheet portion (65) and a second sheet portion (66) are bonded together. A second region (682) is a band-like region extending along the covering region (67) between the covering region (67) and at least one first region (681) out of the pair of first regions (681). In the second region (682), the first sheet portion (65) and the second sheet portion (66) are in contact with or in close proximity to each other without being bonded together. This suppresses leakage of an electrolytic solution (5) to outside the lithium secondary cell (1).

## Description

### Technical Field

The present invention relates to a thin lithium secondary cell.

### Background Art

Thin cells have conventionally been mounted in various types of equipment and used as power supply sources. For example, Japanese Patent Application Laid-Open No. 2016-139494 (Document 1) discloses a laminated battery that includes a laminate member formed by superposing two films on each other and a battery cell stored between these two films. In the laminated battery, the peripheral edge of the laminate member is folded up for the purpose of reducing the space for storing a battery in equipment on which the laminated battery is mounted.

Similarly, in the laminate packaged battery disclosed in Japanese Patent Application Laid-Open No. 2015-153513 (Document 2), both sides of a laminate package are bent 90 degrees for the purpose of improving space efficiency. In the laminate packaged battery disclosed in Japanese Patent Application Laid-Open No. 2009-32612 (Document 3), both sides of laminate films are bent 90 degrees for the purpose of suppressing local deformation of the laminate films and thereby suppressing faulty insulation.

In recent years, consideration is being given to using thin lithium secondary cells (also referred to as lithium-ion secondary cells) as power supply sources of smart cards. As the method of manufacturing such smart cards, processes such as cold lamination and hot lamination are known, the cold lamination being a process in which pressure is applied at ordinary temperature to a lithium secondary cell sandwiched between card base materials, and the hot lamination being a process in which heat and pressure are applied to a lithium secondary cell sandwiched between card base materials.

Meanwhile, Japanese Patent Application Laid-Open No. 2005-74936 (Document 4) relates to a method of manufacturing an IC card on which an IC chip is mounted, instead of a thin cell. The manufacture of such an IC card also involves a process of applying heat and pressure to the IC chip sandwiched between two base sheets.

In the case of manufacturing a device such as a smart card on which a lithium secondary cell is mounted, the lithium secondary cell may be pressed during processes such as hot lamination described above, and may accordingly cause leakage of an electrolytic solution filled inside of the cell, to outside the cell.

### Summary of Invention

The present invention is intended for a thin lithium secondary cell, and it is an object of the present invention to suppress leakage of an electrolytic solution to outside the lithium secondary cell.

The lithium secondary cell according to a preferable embodiment of the present invention includes a positive electrode, a separator arranged on the positive electrode in a predetermined direction of superposition, a negative electrode arranged on the separator on a side opposite to the positive electrode in the direction of superposition, an electrolytic solution with which the positive electrode, the negative electrode, and the separator are impregnated, a sheet-like rectangular cell case that includes two-layer sheet portions covering the positive electrode and the negative electrode from both sides in the direction of superposition, and that houses therein the positive electrode, the separator, the negative electrode, and the electrolytic solution, and two terminals connected respectively to the positive electrode and the negative electrode in the cell case and extending to outside the cell case. The cell case includes a rectangular covering region overlaid on the positive electrode, the separator, and the negative electrode in the direction of superposition, and a rectangular frame-like outer peripheral region surrounding the covering region. The outer peripheral region includes a pair of first regions bonded to the two-layer sheet portions, the pair of first regions being band-like regions extending respectively along a pair of sides other than a side on which the two terminals are arranged, and a second region that is in contact with or in close proximity to the two-layer sheet portions without being bonded thereto, the second region being a band-like region extending along the covering region between the covering region and at least one first region out of the pair of first regions. Accordingly, it is possible to suppress leakage of the electrolytic solution to outside the lithium secondary cell.

Preferably, when a positive active material width and a negative active material width are different widths, the positive active material width being a width of an active material region of the positive electrode in a width direction perpendicular to the pair of sides, and the negative active material width being a width of an active material region of the negative electrode in the width direction, a smaller one of the positive active material width and the negative active material width is used as a divisor, and when the positive active material width and the negative active material width are the same width, either of the positive active material width and the negative active material width is used as a divisor, when the second region is present only between the covering region and one first region out of the pair of first regions, a width of the second region is used as a dividend, and when a pair of second regions, each being the second region, is present between the covering region and both of the pair of first regions, a total width of the pair of second regions is used as a dividend, and a value obtained by dividing the dividend by the divisor is greater than or equal to 0.02 and less than or equal to 1.

Preferably, the at least one first region is folded back in a width direction along a folding line extending parallel to the pair of sides.

Preferably, the folding line is positioned either at a center of the at least one first region in the width direction or on a side opposite to the second region from the center of the at least one first region in the width direction.

Preferably, the folding line is positioned between the second region and a center of the at least one first region in the width direction.

Preferably, the positive electrode includes a sheet-like current collector having conductivity, and an active material plate that is a plate-like ceramic sintered body containing a lithium composite oxide.

Preferably, the active material plate has a structure in which primary particles having a layered rock-salt structure are coupled together, the primary particles have an average inclination angle greater than 0° and less than or equal to 30°, and the average inclination angle is average value of angles formed by (003) planes of the primary particles and a main surface of the active material plate.

Preferably, the lithium secondary cell described above is used as a power supply source of a sheet-like device or a device having flexibility.

Preferably, the lithium secondary cell described above is used as a power supply source of a smart card that is the device having flexibility.

Preferably, the lithium secondary cell described above is used as a power supply source of a target device that undergoes a process of applying pressure while applying heat during manufacture.

These and other objects, features, aspects and advantages of the present invention will become more apparent from the following detailed description of the present invention when taken in conjunction with the accompanying drawings.

### Brief Description of Drawings

Fig. 1 is a sectional view of a lithium secondary cell according to one embodiment;
Fig. 2 is a plan view of the lithium secondary cell;
Fig. 3 is a sectional view of another lithium secondary cell;
Fig. 4 is a sectional view of the lithium secondary cell;
Fig. 5 is a sectional view of the lithium secondary cell;
Fig. 6 is a plan view of the lithium secondary cell;
Fig. 7 is a sectional view of another lithium secondary cell;
Fig. 8 is a sectional view of another lithium secondary cell;
Fig. 9 is a sectional view of another lithium secondary cell;
Fig. 10A is a diagram illustrating a procedure for manufacturing a lithium secondary cell;
Fig. 10B is a diagram illustrating the procedure for manufacturing the lithium secondary cell; and
Fig. 11 is a sectional view of another lithium secondary cell.

### Description of Embodiments

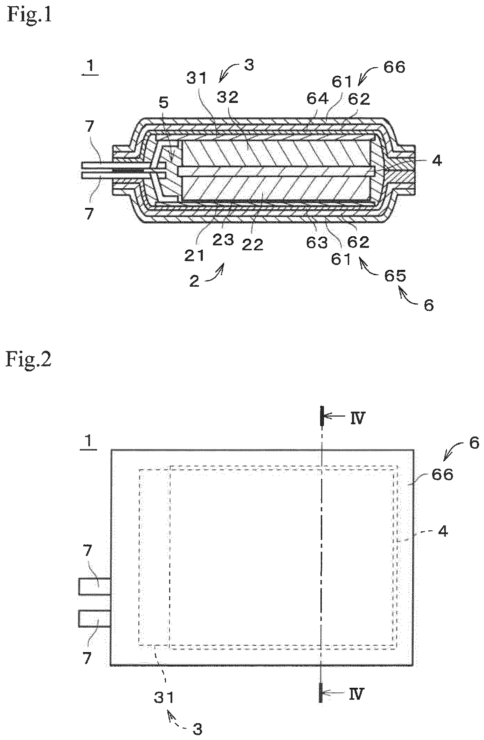

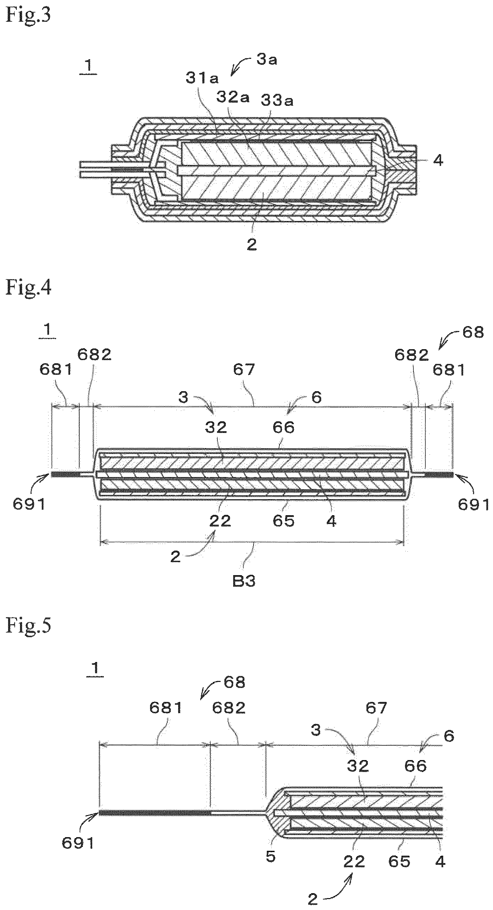

Fig. 1 is a sectional view illustrating a configuration of a lithium secondary cell 1 according to one embodiment of the present invention. Fig. 2 is a plan view of the lithium secondary cell 1. To facilitate understanding of the drawing, the lithium secondary cell 1 and its configuration are illustrated thicker in Fig. 1 than actual thicknesses. Note that part of the structure on the front and back of the section is also illustrated in Fig. 1. The same applies to Fig. 3.

The lithium secondary cell 1 is a compact and thin cell. The lithium secondary cell 1 has, for example, a generally rectangular shape in plan view. In plan view, for example, the lithium secondary cell 1 has a longitudinal length of 10 mm to 46 mm and a lateral length of 10 mm to 46 mm. The lithium secondary cell 1 has a thickness (i.e., a thickness in the up-down direction in Fig. 1) of, for example, 0.30 mm to 0.45 mm and preferably 0.40 mm to 0.45 mm. The lithium secondary cell 1 is a sheet-like member or a thin plate-like member having flexibility. The sheet-like member as used herein refers to a thin member that becomes easily deformed by a relatively small force, and is also referred to as a film-like member. The same applies to the following description.

For example, the lithium secondary cell 1 is mounted on a sheet-like device or a device having flexibility and is used as a power supply source. The sheet-like device as used herein refers to a thin device that becomes easily deformed by a relatively small force, and is also referred to as a film-like device. In the present embodiment, the lithium secondary cell 1 is built in, for example, a smart card having an arithmetic processing function and used as a power supply source of the smart card. The smart card is a card-type device having flexibility. For example, the smart card is used as a card with a fingerprint recognition function and a wireless communication function, the card including a wireless communication IC, an ASIC for fingerprint analysis, and a fingerprint sensor. In the following description, devices such as smart cards for which the lithium secondary cell 1 is used as a power supply source are also referred to as "target devices."

The lithium secondary cell 1 is mounted on a smart card, for example, by cold lamination in which pressure is applied at ordinary temperature or by hot lamination in which pressure is applied with the application of heat. The processing temperature in the hot lamination is, for example, in the range of 110°C to 260°C. An upper limit of the processing temperature is preferably lower than 240°C, more preferably lower than 220°C, yet more preferably lower than 200°C, and most preferably lower than or equal to 150°C. In the hot lamination, the processing pressure is, for example, in the range of 0.1 mega-pascal (MPa) to 6 MPa, and the processing time (i.e., the heating and pressing time) is, for example, in the range of 10 to 20 minutes.

The lithium secondary cell 1 includes the positive electrode 2, the negative electrode 3, the separator 4, an electrolytic solution 5, the cell case 6, and two terminals 7. The positive electrode 2, the separator 4, and the negative electrode 3 are superposed in a predetermined direction of superposition. In the example illustrated in Fig. 1, the positive electrode 2, the separator 4, and the negative electrode 3 are laminated in the up-down direction in the drawing. In the following description, the "upper and lower sides in Fig. 1" are simply referred to as the "upper and lower sides." The "up-down direction in Fig. 1" is simply referred to as the "up-down direction" or also referred to as the "direction of superposition." The up-down direction in Fig. 1 does not necessarily have to match an actual up-down direction when the lithium secondary cell 1 is mounted on a target device such as a smart card.

In the example illustrated in Fig. 1, the separator 4 is arranged on the upper face of the positive electrode 2 in the up-down direction (i.e., the direction of superposition). The negative electrode 3 is arranged on the upper face of the separator 4 in the up-down direction. In other words, the negative electrode 3 is arranged on the separator 4 on the side opposite to the positive electrode 2 in the up-down direction. The positive electrode 2, the separator 4, and the negative electrode 3 each have, for example, a generally rectangular shape in plan view. The positive electrode 2, the separator 4, and the negative electrode 3 have almost the same shape (i.e., almost the same form and the same dimensions) in plan view.

The cell case 6 is a sheet-like and bag-shaped member. The cell case 6 has a generally rectangular shape in plan view. The cell case 6 includes two-layer sheet portions 65 and 66 superposed in the up-down direction. In the following description, the sheet portion 65 located on the lower side of the positive electrode 2 is referred to as a "first sheet portion 65," and the sheet portion 66 located on the upper side of the negative electrode 3 is referred to as a "second sheet portion 66." The outer peripheral edge of the first sheet portion 65 and the outer peripheral edge of the second sheet portion 66 are bonded together by, for example, so-called heat seal. For example, the first sheet portion 65 and the second sheet portion 66 of the cell case 6 are each formed of a laminate film in which metal foil 61 formed of a metal such as aluminum (Al) and an insulating resin layer 62 are laminated on each other. In the first sheet portion 65 and the second sheet portion 66, the resin layer 62 is located on the inner side of the metal foil 61.

The cell case 6 covers the positive electrode 2 and the negative electrode 3 from both sides in the up-down direction. The cell case 6 houses therein the positive electrode 2, the separator 4, the negative electrode 3, and the electrolytic solution 5. The electrolytic solution 5 is continuously present around the positive electrode 2, the separator 4, and the negative electrode 3. In other words, the electrolytic solution 5 is present between the positive electrode 2 and the negative electrode 3. The positive electrode 2, the separator 4, and the negative electrode 3 are impregnated with the electrolytic solution 5. The two terminals 72 extend outward from the inside of the cell case 6. Inside the cell case 6, one of the terminals 7 is electrically connected to the positive electrode 2, and the other terminal 7 is electrically connected to the negative electrode 3.

The positive electrode 2 includes a positive current collector 21, a positive active material plate 22, and a conductive bonding layer 23. The positive current collector 21 is a sheet-like member having conductivity. The lower face of the positive current collector 21 is bonded to the resin layer 62 of the cell case 6 via a positive bonding layer 63. The positive bonding layer 63 is formed of, for example, a mixture of resins including an acid-modified polyolefin resin and an epoxy resin. The positive bonding layer 63 may be formed by any of other various materials. The positive bonding layer 63 has a thickness of, for example, 0.5 µm to 10 µm.

For example, the positive current collector 21 includes metal foil formed of a metal such as aluminum and a conductive carbon layer laminated on the upper face of the metal foil. In other words, the main surface of the positive current collector 21 that faces the positive active material plate 22 is covered with the conductive carbon layer. The aforementioned metal foil may be formed of any of various metals other than aluminum (e.g., copper, nickel, silver, gold, chromium, iron, tin, lead, tungsten, molybdenum, titanium, zinc, or an alloy containing any of these metals). Note that the aforementioned conductive carbon layer may be omitted from the positive current collector 21.

The positive active material plate 22 (i.e., the active material plate of the positive electrode 2) is a relatively thin plate-like ceramic sintered body containing a lithium composite oxide. The positive active material plate 22 is bonded to the upper face of the positive current collector 21 via the conductive bonding layer 23. The positive active material plate 22 faces the separator 4 in the up-down direction. The upper face of the positive active material plate 22 is in contact with the lower face of the separator 4. The positive active material plate 22 substantially does not contain resins. Thus, the main surface of the positive electrode 2 that faces the separator 4 (i.e., the upper face in Fig. 1) substantially does not contain resins.

The positive active material plate 22 has a structure in which (many) primary particles are coupled together. The primary particles are composed of a lithium composite oxide having a layered rock-salt structure. The lithium composite oxide is typically an oxide expressed by the general formula: LiₚMO₂ (where 0.05 < p < 1.10), where M is at least one kind of transition metal and contains one or more kinds selected from the group consisting of cobalt (Co), nickel (Ni), and manganese (Mn). The layered rock-salt structure as used herein refers to a crystal structure in which a lithium layer and a transition metal layer other than lithium are alternately laminated one above another with an oxygen layer sandwiched therebetween. That is, the layered rock-salt structure is a crystal structure in which a transition metal ion layer and a sole lithium layer are alternately laminated via oxide ions (typically, α-NaFeO₂-type structure in which a transition metal and lithium are regularly arranged in the [111] axial direction of a cubic crystal rock-salt structure).

Preferable examples of the lithium composite oxide having a layered rock-salt structure include lithium cobalt oxides (LiₚCoO₂, where 1 ≤ p ≤ 1.1), lithium nickel oxides (LiNiO₂), lithium manganese oxides (Li₂MnO₃), nickel lithium manganese oxides (Liₚ(Ni_{0.5}, Mn_{0.5})O₂), solid solutions expressed by the general formula: Liₚ(Coₓ, Ni_{y}, Mn_{z})O₂ (where 0.97 ≤ p ≤ 1.07 and x + y + z = 1), solid solutions expressed by Liₚ(Coₓ, Ni_{y}, Al_{z})O₂ (where 0.97 ≤ p ≤ 1.07, x + y + z = 1, 0 < x ≤ 0.25, 0.6 ≤ y ≤ 0.9, and 0 < z ≤ 0.1), and solid solutions of Li₂MnO₃ and LiMO₂ (where M is a transition metal such as Co or Ni). In particular, the lithium composite oxide is preferably a lithium cobalt oxide LiₚCoO₂ (where 1 ≤ p ≤ 1.1) and, for example, LiCoO₂ (LCO).

The positive active material plate 22 may further contain one or more kinds of elements such as magnesium (Mg), aluminum, silicon (Si), calcium (Ca), titanium (Ti), vanadium (V), chromium (Cr), iron (Fe), copper (Cu), zinc (Zn), gallium (Ga), germanium (Ge), strontium (Sr), yttrium (Y), zirconia (Zr), niobium (Nb), molybdenum (Mo), silver (Ag), tin (Sn), antimony (Sb), tellurium (Te), barium (Ba), and bismuth (Bi). Alternatively, the positive active material plate 22 may be subjected to sputtering using gold (Au) or the like as a current-collecting assistant.

In the positive active material plate 22, a mean particle diameter of the aforementioned primary particles, i.e., a primary particle diameter, is, for example, less than or equal to 20 µm and preferably less than or equal to 15 µm. The primary particle diameter is also, for example, greater than or equal to 0.2 µm and preferably greater than or equal to 0.4 µm. The primary particle diameter can be measured by analyzing a scanning electron microscope (SEM) image of a section of the positive active material plate 22. Specifically, for example, the positive active material plate 22 is processed by a cross-section polisher (CP) to expose a grinded section, and this grinded section is observed with an SEM at a predetermined magnification (e.g., 1000x magnification) with a predetermined field of view (e.g., 125 µm × 125 µm). At this time, the field of view is set such that 20 or more primary particles are included in the field of view. Then, for every primary particle in a resultant SEM image, the diameter of a circumscribed circle drawn from the primary particle is obtained, and an average value of the obtained diameters is assumed to be the primary particle diameter.

In the positive active material plate 22, the primary particles preferably have an average inclination angle (i.e., an average orientation angle) greater than 0° and less than or equal to 30°. The average inclination angle is also more preferably greater than or equal to 5° and less than or equal to 28°, and more preferably greater than or equal to 10° and less than or equal to 25°. The average inclination angle is an average value of angles formed by the (003) planes of the primary particles and the main surface of the positive active material plate 22 (e.g., the lower face of the positive active material plate 22).

The inclination angles of the primary particles (i.e., the angles formed by the (003) planes of the primary particles and the main surface of the positive active material plate 22) can be measured by analyzing a section of the positive active material plate 22 by electron backscatter diffraction (EBSD). Specifically, for example, the positive active material plate 22 is processed by a cross-section polisher to expose a grinded section, and this grinded section is analyzed by EBSD at a predetermined magnification (e.g., 1000x magnification) with a predetermined field of view (e.g., 125 µm × 125 µm). In a resultant EBSD image, the inclination angle of each primary particle is expressed by the shades of colors, i.e., a darker color indicates a smaller inclination angle. Then, an average value of the inclination angles of the primary particles obtained from the EBSD image is assumed to be the aforementioned average inclination angle.

Among the primary particles constituting the positive active material plate 22, the proportion of primary particles having inclination angles greater than 0° and less than or equal to 30° is preferably 60% or higher, more preferably 80% or higher, and yet more preferably 90% or higher. There are no particular limitations on an upper limit of this proportion, and the proportion may be 100%. In the aforementioned EBSD image, this proportion can be obtained by obtaining a total area of the primary particles having inclination angles greater than 0° and less than or equal to 30° and dividing this total area of the primary particles by a total area of all the primary particles.

The positive active material plate 22 has a porosity of, for example, 25% to 45%. The porosity of the positive active material plate 22 as used herein refers to a volume ratio of pores (including open pores and closed pores) of the positive active material plate 22. This porosity can be measured by analyzing an SEM image of a section of the positive active material plate 22. For example, the positive active material plate 22 is processed by a cross-section polisher (CP) to expose a grinded section. This grinded section is observed with an SEM at a predetermined magnification (e.g., 1000x magnification) with a predetermined field of view (e.g., 125 µm × 125 µm). A resultant SEM image is analyzed to obtain the porosity (%) by dividing a total area of all the pores in the field of view by the area (cross-sectional area) of the positive active material plate 22 in the field of view and multiplying the obtained value by 100.

An average value of the diameters of the pores included in the positive active material plate 22, i.e., a mean pore diameter, is, for example, less than or equal to 15 µm, preferably less than or equal to 12 µm, and more preferably less than or equal to 10 µm. The mean pore diameter is also, for example, greater than or equal to 0.1 µm and preferably greater than or equal to 0.3 µm. The aforementioned diameters of the pores are typically the diameters of spheres when the pores are assumed to be the spheres having the same volume or the same cross-sectional area. The mean pore diameter is obtained by calculating an average value of the diameters of pores on the basis of the number of pores. The mean pore diameter can be obtained by, for example, analysis of a sectional SEM image or a known method such as mercury porosimetry. Preferably, the mean pore diameter is measured by mercury porosimetry using a mercury porosimeter.

In the example illustrated in Fig. 1, the positive active material plate 22 is a single plate-like member, but may be divided into a plurality of plate-like members (hereinafter, referred to as "active material plate elements"). In this case, each of the active material plate elements is bonded to the positive current collector 21 via the conductive bonding layer 23. For example, the active material plate elements are arranged in a matrix (i.e., in grid form) on the positive current collector 21. Each active material plate element has, for example, a generally rectangular shape in plan view. In plan view, the active material plate elements may have almost the same shape (i.e., almost the same form and almost the same dimensions) or may have different shapes. The active material plate elements are arranged spaced from one another in plan view.

The conductive bonding layer 23 includes conductive powder and a binder. Examples of the conductive powder include acetylene black, scaly natural graphite, carbon nanotubes, carbon nanofibers, carbon nanotube derivatives, and carbon nanofiber derivatives. The binder contains, for example, polyimide-amide resins. The polyimide-amide resins contained in the binder may be of one kind, or may be of two or more kinds. The binder may contain resins other than polyimide-amide resins. The conductive bonding layer 23 is formed by applying the conductive powder and the binder described above as well as a liquid or paste adhesive containing a solvent to the positive current collector 21 or the positive active material plate 22 and causing the solvent to evaporate and solidify between the positive electrode collector 21 and the positive active material plate 22.

The positive current collector 21 has a thickness of, for example, 9 µm to 50 µm, preferably 9 µm to 20 µm, and more preferably 9 µm to 15 µm. The positive active material plate 22 has a thickness of, for example, 15 µm to 200 µm, preferably 30 µm to 150 µm, and more preferably 50 µm to 100 µm. By increasing the thickness of the positive active material plate 22, it is possible to increase the capacity of the active material per unit area and to increase the energy density of the lithium secondary cell 1. By reducing the thickness of the positive active material plate 22, it is possible to suppress deterioration of cell characteristics (in particular, an increase in resistance value) accompanying the repetition of charging and discharging. The conductive bonding layer 23 has a thickness of, for example, 3 µm to 28 µm and preferably 5 µm to 25 µm.

The negative electrode 3 includes a negative current collector 31 and a negative active material layer 32. The negative current collector 31 is a sheet-like member having conductivity. The upper face of the negative current collector 31 is bonded to the cell case 6 via a negative bonding layer 64. For example, the negative bonding layer 64 is formed of a mixture of resins including an acid-modified polyolefin resin and an epoxy resin. The negative bonding layer 64 may be formed of any of other various materials. The negative bonding layer 64 has a thickness of, for example, 0.5 µm to 10 µm.

For example, the negative current collector 31 is metal foil formed of a metal such as copper. The metal foil may be formed of any of various metals other than copper (e.g., copper, stainless steel, nickel, aluminum, silver, gold, chromium, iron, tin, lead, tungsten, molybdenum, titanium, zinc, or an alloy containing any of these metals).

The negative active material layer 32 includes a binder composed primarily of resin and a carbonaceous material serving as a negative active material. The negative active material layer 32 is applied as a coat on the lower face of the negative current collector 31. That is, the negative electrode 3 is a so-called coating electrode. The negative active material layer 32 faces the separator 4 in the up-down direction. The lower face of the negative active material layer 32 is in contact with the upper face of the separator 4. Examples of the aforementioned carbonaceous material of the negative active material layer 32 include graphite (natural graphite or artificial graphite), pyrolytic carbon, coke, resin fired bodies, mesophase microspheres, and mesosphere pitches. The negative electrode 3 may use a lithium-occluding substance as the negative active material, instead of the carbonaceous material. Examples of the lithium-occluding substance include silicon, aluminum, tin, iron, iridium, an alloy containing any of the aforementioned materials, an oxide containing any of the aforementioned materials, and a fluoride containing any of the aforementioned materials.

The binder may be made of, for example, styrene-butadiene rubber (SBR), polyvinylidene fluoride (PVDF), or a mixture of these materials. In the present embodiment, SBR is used as the binder. Styrene-butadiene rubber (SBR) is less likely to dissolve in γ-butyrolactone (GBL) contained in the electrolytic solution 5, which will be described later, than PVDF. Thus, using SBR as the binder of the negative electrode 3 suppresses deterioration of the negative active material layer 32 caused by the electrolytic solution 5.

The negative current collector 31 has a thickness of, for example, 5 µm to 25 µm, preferably 8 µm to 20 µm, and more preferably 8 µm to 15 µm. The negative active material layer 32 has a thickness of, for example, 20 µm to 300 µm, preferably 30 µm to 250 µm, and more preferably 30 µm to 150 µm. By increasing the thickness of the negative active material layer 32, it is possible to increase the capacity of the active material per unit area and to increase the energy density of the lithium secondary cell 1. By reducing the thickness of the negative active material layer 32, it is possible to suppress deterioration of cell characteristics (in particular, an increase in resistance value) accompanying the repetition of charging and discharging.

The lithium secondary cell 1 may include a negative electrode 3a having a structure different from the structure of the negative electrode 3 as illustrated in Fig. 3, instead of the negative electrode 3 serving as a coating electrode. The negative electrode 3a has almost the same structure as the aforementioned positive electrode 2. Specifically, the negative electrode 3a includes a negative current collector 31a, a negative active material plate 32a, and a conductive bonding layer 33a. The negative current collector 31a is a sheet-like member having conductivity. For example, the negative current collector 31a is a member formed of a material similar to that of the aforementioned negative current collector 31 and having the same structure as the negative current collector 31.

The negative active material plate 32a (i.e., the active material plate of the negative electrode 3a) is a relatively thin plate-like ceramic sintered body that contains a lithium composite oxide (e.g., lithium titanium oxide (LTO)). The negative active material plate 32a is bonded to the lower face of the negative current collector 31a via the conductive bonding layer 33a. For example, the conductive bonding layer 33a is formed of a material similar to that of the aforementioned conductive bonding layer 23 of the positive electrode 2. The negative active material plate 32a faces the separator 4 in the up-down direction. The lower face of the negative active material plate 32a is in contact with the upper face of the separator 4. Like the positive active material plate 22, the negative active material plate 32a substantially does not contain resins. Thus, the main surface of the negative electrode 3a that faces the separator 4 (i.e., the lower face in Fig. 3) substantially does not contain resins.

The negative current collector 31 has a thickness of, for example, 5 µm to 25 µm, preferably 8 µm to 20 µm, and more preferably 8 µm to 15 µm. The negative active material plate 32a has a thickness of, for example, 10 µm to 300 µm, preferably 30 µm to 200 µm, and more preferably 30 µm to 150 µm. By increasing the thickness of the negative active material plate 32a, it is possible to increase the capacity of the active material per unit area and to increase the energy density of the lithium secondary cell 1. By reducing the thickness of the negative active material plate 32a, it is possible to suppress deterioration of cell characteristics (in particular, an increase in resistance value) accompanying the repetition of charging and discharging. The conductive bonding layer 33a has a thickness of, for example, 3 µm to 30 µm and preferably 5 µm to 25 µm.

In the example illustrated in Fig. 3, the negative active material plate 32a is a single plate-like member, but may be divided into a plurality of plate-like members (hereinafter, referred to as "active material plate elements"). In this case, each of the active material plate elements is bonded to the negative current collector 31a via the conductive bonding layer 33a. For example, the active material plate elements are arranged in a matrix (i.e., in grid form) on the negative current collector 31a. Each active material plate element has, for example, a generally rectangular shape in plan view. In plan view, the active material plate elements may have almost the same shape (i.e., almost the same form and almost the same dimensions) or may have different shapes. The active material plate elements are arranged spaced from one another in plan view.

In the lithium secondary cell 1 illustrated in Figs. 1 and 3, the electrolytic solution 5 is, for example, a solution obtained by dissolving lithium borofluoride (LiBF₄) in a nonaqueous solvent. The nonaqueous solvent may be a sole solvent of γ-butyrolactone (GBL), or may be a mixed solvent containing GBL and ethylene carbonate (EC). The nonaqueous solvent containing GBL increases the boiling point of the electrolytic solution 5 and accordingly improves the heat resistance of the lithium secondary cell 1. From the viewpoint of improving the heat resistance of the lithium secondary cell 1, the volume ratio of EC and GBL in the nonaqueous solvent is, for example, in the range of 0:1 to 1:1 (i.e., the GBL ratio is in the range of 50% to 100% by volume), preferably in the range of 0:1 to 1:1.5 (i.e., the GBL ratio is in the range of 60% to 100% by volume), more preferably in the range of 0:1 to 1:2 (i.e., the GBL ratio is in the range of 66.6% to 100% by volume), and yet more preferably in the range of 0:1 to 1:3 (i.e., the GBL ratio is in the range of 75% to 100% by volume). The solvent of the electrolytic solution 5 may be modified in various ways. For example, the solvent of the electrolytic solution 5 does not necessarily have to contain GBL and may be a sole solvent of EC.

Lithium borofluoride (LiBF₄) serving as a solute is an electrolyte having a high decomposition temperature. This further improves the heat resistance of the lithium secondary cell 1. The concentration of LiBF₄ in the electrolytic solution 5 is, for example, in the range of 0.5 mol/L to 2 mol/L, preferably in the range of 0.6 mol/L to 1.9 mol/L, more preferably in the range of 0.7 mol/L to 1.7 mol/L, and yet more preferably in the range of 0.8 mol/L to 1.5 mol/L. Note that the solute of the electrolytic solution 5 may be modified in various ways. For example, the solute of the electrolytic solution 5 may be lithium phosphate hexafluoride (LiPF₆).

Preferably, the electrolytic solution 5 further contains vinylene carbonate (VC) and/or fluoroethylene carbonate (FEC) as an additive. Both VC and FEC are excellent in heat resistance. The electrolytic solution 5 containing such an additive forms an SEI film excellent in heat resistance on the surface of the negative electrode 3 and further improves the heat resistance of the lithium secondary cell 1.

The separator 4 is a sheet-like member or a thin plate-like insulating member. For example, the separator 4 is a single-layer separator formed of resin. In other words, the surfaces of the separator 4 that face the positive electrode 2 and the negative electrode 3 are formed of resin. Examples of the resin include polyimide and polyester (e.g., polyethylene terephthalate (PET)). In the present embodiment, the separator 4 is a porous film made of polyimide (e.g., three-dimensional porous structure (3DOM)). Polyimide is more excellent in heat resistance than polyethylene and polypropylene and is also more excellent in wettability with the aforementioned GBL. Thus, using the polyimide separator 4 improves the heat resistance of the lithium secondary cell 1. Polyimide also prevents the electrolytic solution 5 from being rejected by the separator 4 and allows the electrolytic solution 5 to easily permeate through the separator 4.

Note that the separator 4 may be a two-layer separator in which a resin layer is laminated on a ceramic substrate. Alternatively, the separator 4 may be a two-layer separator in which a resin layer serving as a substrate is coated with ceramic. The separator 4 may have a multilayer structure including three or more layers. For example, the separator 4 may be a three-layer separator in which a resin layer is formed on each of the upper and lower surfaces of a ceramic substrate.

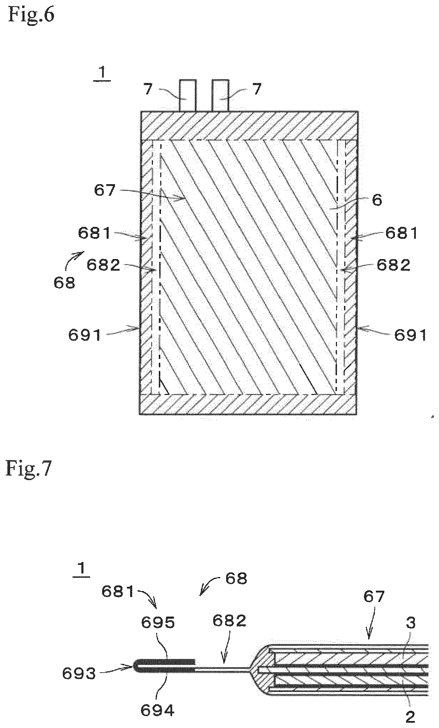

Fig. 4 is a sectional view of the lithium secondary cell 1 taken at position IV-IV in Fig. 2. Fig. 5 is a diagram illustrating the left end of the lithium secondary cell 1 in Fig. 4 in enlarged dimensions. To facilitate understanding of the drawings, the lithium secondary cell 1 and its configuration are illustrated thicker in Figs. 4 and 5 than actual thicknesses. A detailed illustration of the laminate structure of the cell case 6 is omitted, and the cell case 6 is indicated by a single solid line. Fig. 6 is a plan view of the lithium secondary cell 1.

As illustrated in Figs. 4 to 6, the cell case 6 includes a covering region 67 and an outer peripheral region 68. The outer peripheral region 68 includes first regions 681 and second regions 682. In the example illustrated in Figs. 4 and 6, the outer peripheral region 68 includes two first regions 681 and two second regions 682. In Fig. 6, the covering region 67, the first regions 681, and the second regions 682 are each enclosed by a chain double-dashed line. A region other than the covering region 67 and the second regions 682 of the outer peripheral region 68 is crosshatched in Fig. 6. The second regions 682 of the outer peripheral region 68 are not crosshatched.

In plan view, the covering region 67 of the cell case 6 is a generally rectangular region overlaid on the positive electrode 2, the separator 4, and the negative electrode 3 in the up-down direction. The outer peripheral region 68 is a region of the cell case 6 that excludes the covering region 67 (i.e., a region that does not overlap with the positive electrode 2, the separator 4, and the negative electrode 3), and a generally rectangular frame-like region surrounding the covering region 67 in plan view. The outer peripheral region 68 is contiguous with the covering region 67.

The two first regions 681 are generally rectangular, generally band-like regions extending respectively along a pair of sides on both sides in the left-right direction (hereinafter, also referred to as "long sides 691") in Figs. 4 and 6. In the following description, the left-right direction in Figs. 4 to 6 is also referred to as a "width direction." The width direction is generally perpendicular to the pair of long sides 691 of the cell case 6. Each first region 681 is a region including one long side 691 and spaced in the width direction from the pair of sides of the covering region 67 in the width direction. In the pair of first regions 681, the two-layer sheet portions (i.e., the first sheet portion 65 and the second sheet portion 66) of the cell case 6 overlaid in the up-down direction are bonded together as described above.

In the example illustrated in Fig. 6, the length of each first region 681 in a direction perpendicular to the width direction (hereinafter, also referred to as a "longitudinal direction") is almost the same as the length of the covering region 67 in the longitudinal direction. The width of each first region 681 in the width direction (hereinafter, also simply referred to as the "width") is almost constant along approximately the entire length of the first region 681 in the longitudinal direction. For example, the width of the first regions 681 is in the range of 1 mm to 5 mm, preferably in the range of 1.5 mm to 4 mm, and more preferably in the range of 2 mm to 3 mm. Note that the first region 681 may have a shape substantially regarded as a band-like shape, and the width of each first region 681 in the longitudinal direction may be modified to some extent.

The two second regions 682 are arranged on both sides of the covering region 67 in the width direction between the covering region 67 and the pair of first regions 681. The two second regions 682 are generally rectangular, generally band-like regions extending along the pair of sides of the covering region 67 in the width direction. In other words, the two second regions 682 are generally rectangular, generally band-like regions extending in the longitudinal direction along the pair of first regions 681. Each second region 682 is contiguous with the covering region 67 and one first region 681 in the width direction. In the second regions 682, the two-layer sheet portions (i.e., the first sheet portion 65 and the second sheet portion 66) of the cell case 6 overlaid in the up-down direction are in contact with each other without being bonded together. This contact is direct contact without the intervention of, for example, the electrolytic solution 5 between the first sheet portion 65 and the second sheet portion 66. In the second regions 682, the first sheet portion 65 and the second sheet portion 66 may be in close proximity to each other with slight voids therebetween. In these voids, a slight amount of the electrolytic solution 5 may or may not be present.

In the example illustrated in Fig. 6, the length of each second region 682 in the longitudinal direction is almost the same as the lengths of the covering region 67 and the first regions 681 in the longitudinal direction. The width of each second region 682 in the width direction is almost constant along approximately the entire length of the second region 682 in the longitudinal direction. For example, the width of the second regions 682 is in the range of 0.3 mm to 25 mm, preferably in the range of 0.5 mm to 15 mm, and more preferably in the range of 1 mm to 5 mm. Note that the second regions 682 may have a shape substantially regarded as a band-like shape, and the width of the second regions 682 in the longitudinal direction may be modified to some extent.

In the following description, a total width of the pair of second regions 682 arranged side by side in the width direction is referred to as a "a second-region width A1." Also, the width of the positive active material plate 22 of the positive electrode 2 (i.e., the width of an active material region of the positive electrode 2 where the active material is provided) is referred to as a "positive active material width," and the width of the negative active material layer 32 of the negative electrode 3 (i.e., the width of an active material region of the negative electrode 3 where the active material is provided) is referred to as a "negative active material width." When the positive active material width and the negative active material width are different widths, the smaller one of the positive active material width and the negative active material width is referred to as an "active material-region width B3". On the other hand, when the positive active material width and the negative active material width are the same width, either of the positive active material width and the negative active material width is referred to as the "active material-region width B3." In the example illustrated in Fig. 4, the width of the positive active material plate 22 is almost the same as the width of the negative active material layer 32. In this case, the active material-region width B3 may be either of the positive active material width and the negative active material width.

When the second-region width A1 is defined as a dividend and the active material-region width B3 is defined as a divisor, the value obtained by dividing the dividend by the divisor (i.e., second-region width A1/active material-region width B3) is, for example, greater than or equal to 0.02 and preferably greater than or equal to 0.04. Also, second-region width A1/active material-region width B3 is, for example, less than or equal to 1 and preferably less than or equal to 0.2. The active material-region width B3 is, for example, in the range of 15 mm to 25 mm.

In the cell case 6 of the lithium secondary cell 1, the second regions 682 do not necessarily have to be provided on both sides of the covering region 67 in the width direction, and may be provided on only one side of the covering region 67 in the width direction. In other words, the second regions 682 may be provided between the covering region 67 and at least one of the pair of first regions 681. In the cell case 6, when there is only one second region 682 between the covering region 67 and one of the pair of first regions 681, the aforementioned second-region width A1 is the width of this one second region 682.

In the example illustrated in Fig. 4, the first regions 681 and the second regions 682 on both ends of the cell case 6 in the width direction extend generally in parallel with the width direction without any folding, but the shapes of the first regions 681 may be modified in various ways. For example, as illustrated in Figs. 7 to 9, the first regions 681 of the cell case 6 may be folded back approximately 180° inward in the width direction (i.e., toward the side closer to the covering region 67) along a folding line 693 extending in parallel with the pair of long sides 691 of the cell case 6 (see Fig. 6). In the following description, a portion of the outer peripheral region 68 that extends from the covering region 67 to the folding line 693 is referred to as a "non-folded portion 694," and a portion of the outer peripheral region 68 that is folded back inward in the width direction along the folding line 693 is referred to as a "folded portion 695." The folded portion 695 faces the non-folded portion 694 in the up-down direction.

In the examples illustrated in Figs. 7 to 9, the folded portion 695 is folded back upward in the drawing (i.e., toward the negative electrode 3), but the folded portion 695 may be folded downward in the drawing (i.e., toward the positive electrode 2). Although the first region 681 and the second region 682 on one side in the width direction are illustrated in Figs. 7 to 9, the first region 681 and the second region 682 on the other side in the width direction may also have the same structure.

In the example illustrated in Fig. 7, the folding line 693 is positioned almost at the center of the first region 681 of the outer peripheral region 68 in the width direction. Thus, the edge of the folded portion 695 (i.e., the side edge on the side opposite to the folding line 693) is positioned at almost the same position in the width direction as the position of the boundary between the first and second regions 681 and 682 of the non-folded portion 694. In other words, the first region 681 is folded in two along the folding line 693, and the folded portion 695 of the first region 681 faces the remaining portion of the first region 681 in the up-down direction. The folded portion 695 of the first region 681 does not face the second region 682 in the up-down direction. The second region 682 is not folded back because it is positioned between the folding line 693 and the covering region 67. In other words, the folded portion 695 does not include the second region 682.

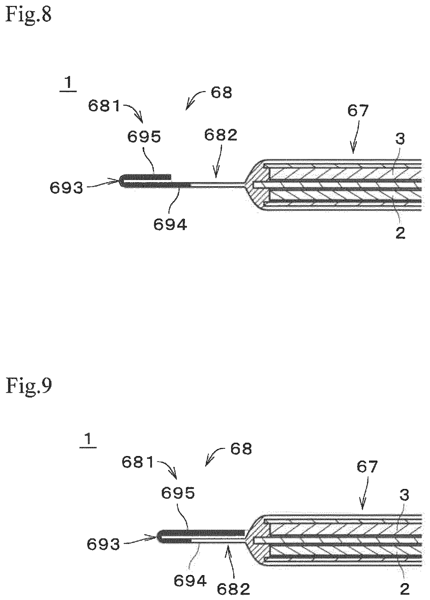

In the example illustrated in Fig. 8, the folding line 693 is positioned on the side opposite to the second region 682 from the center of the first region 681 of the outer peripheral region 68 in the width direction (i.e., outward in the width direction from the center). Thus, the edge of the folded portion 695 is positioned outward in the width direction of the boundary between the first region 681 and the second region 682 in the non-folded portion 694 (i.e., on the side farther away from the covering region 67). In other words, the first region 681 is folded in two along the folding line 693, and the folded portion 695 of the first region 681 faces the remaining portion of the first region 681 in the up-down direction. Moreover, the folded portion 695 of the first region 681 does not face the second region 682 in the up-down direction. The second region 682 is not folded back because it is positioned between the folding line 693 and the covering region 67. In other words, the folded portion 695 does not include the second region 682.

In the example illustrated in Fig. 9, the folding line 693 is positioned between the second region 682 and the center of the first region 68 of the outer peripheral region 68 in the width direction. Thus, the edge of the folded portion 695 is positioned inward in the width direction of the boundary between the first region 681 and the second region 682 in the non-folded portion 694 (i.e., on the side closed to the covering region 67). In other words, the first region 681 is folded in two along the folding line 693, and the folded portion 695 of the first region 681 faces the remaining portion of the first region 681 and the second region 682 in the up-down direction. In the example illustrated in Fig. 9, the folded portion 695 faces almost the entire non-folded portion 694 in the up-down direction. The second region 682 is not folded back because it is positioned between the covering region 67 and the folding line 693. In other words, the folded portion 695 does not include the second regions 682.

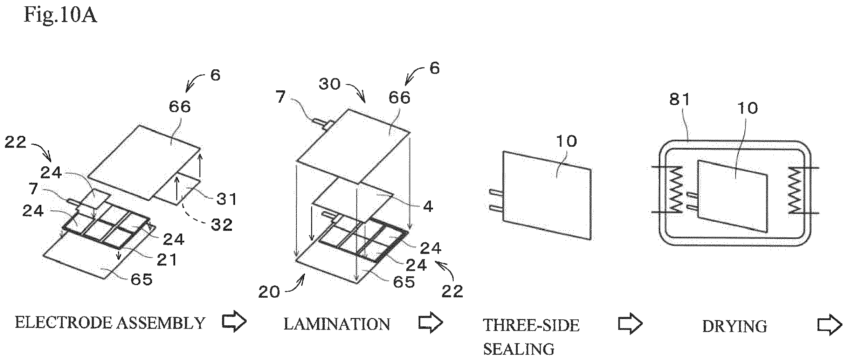

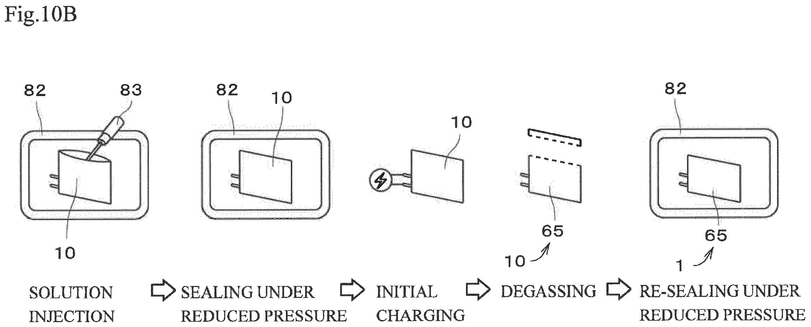

Next, one example of a procedure for manufacturing the lithium secondary cell 1 will be described with reference to Figs. 10A and 10B. First, two aluminum laminate films (with a three-layer structure including a polypropylene film, aluminum foil, and a nylon film and a thickness of 61 µm, produced by SHOWA DENKO K.K.) are prepared as the first sheet portion 65 and the second sheet portion 66 of the cell case 6. Also, the positive active material plate 22 is prepared. The positive active material plate 22 is formed by sintering an LiCoO₂ green sheet. In the example illustrated in Fig. 10A, the positive active material plate 22 includes a plurality of active material plate elements 24. Note that the manufacturing method described below remains almost unchanged when the positive active material plate 22 is an integral member (i.e., a single plate).

The LiCoO₂ green sheet is prepared as follows. First, Co₃O₄ powder (produced by Seido Chemical Industry Co., Ltd.) and Li₂CO₃ powder (produced by Honjo Chemical Corporation) are weighed and mixed so as to have an Li/Co molar ratio of 1.01, and then resultant mixed powder is held at 780°C for five hours. Then, resultant powder is pulverized and cracked into particles with D50 of 0.4 µm in terms of volume in a pot mill so as to obtain powder of plate-like LiCoO₂ particles.

Then, 100 parts by weight of the resultant LiCoO₂ powder, 100 parts by weight of a dispersion medium (toluene/isopropanol ratio of 1:1), 10 parts by weight of a binder (polyvinyl butyral: product number BM-2, produced by Sekisui Chemical Co., Ltd.), 4 parts by weight of a plasticizer (DOP: Di(2-ethylhexyl)phthalate, produced by Kurogane Kasei Co., Ltd.), and 2 parts by weight of a dispersant (product name: RHEODOL SP-O30, produced by Kao Corporation) are mixed. A resultant mixture is stirred and deaerated under a reduced pressure and adjusted to have a viscosity of 4000 cP, so that LiCoO₂ slurry is prepared. The viscosity is measured using an LVT-type viscometer manufactured by AMETEK Brookfield, Inc. The slurry prepared in this way is molded in sheet form on a polyethylene terephthalate (PET) film by doctor blading so as to form the LiCoO₂ green sheet. The LiCoO₂ green sheet after drying has a thickness of 98 µm.

Next, the LiCoO₂ green sheet delaminated from the PET film is cut out into a piece measuring 50 mm per side by a cutter knife and placed on the center of a setter made of magnesia and serving as a lower setter (dimensions: 90 mm per side and a height of 1 mm). Also, a porous magnesia setter is placed as an upper setter on the LiCoO₂ sheet. The LiCoO₂ sheet, sandwiched between the setters, is placed in an alumina sheath with 120 mm per side (produced by Nikkato Corporation). At this time, the alumina sheath is not hermetically sealed and is covered with a lid while leaving a clearance of 0.5 mm. A resultant laminate is fired by increasing the temperature of the laminate up to 600°C at 200°C/h and degreasing the laminate for three hours and then by increasing the temperature of the laminate up to 870°C at 200°C/h and holding the laminate for 20 hours. After the firing, the temperature is reduced down to an ambient temperature, and a fired body is taken out of the alumina sheath. In this way, an LiCoO₂ sintered plate with a thickness of 90 µm is obtained. The resultant LiCoO₂ sintered plate is cut out into rectangular pieces with dimensions of 10.5 mm × 9.5 mm by a laser beam machine so as to obtain a plurality of active material plate elements 24 (i.e., the positive active material plate 22).

When the positive active material plate 22 has been prepared, acetylene black is mixed into a solution obtained by dissolving polyamide-imide (PAI) in N-methylpyrrolidone so as to prepare slurry, and 2 microliters (µL) of this slurry is dropped on the positive current collector 21 (aluminum foil with a thickness of 9 mm) so as to form the conductive bonding layer 23. Then, the positive active material plate 22 is placed and dried on the conductive bonding layer 23. In the example illustrated in Fig. 10A, the positive active material plate 22 including the active material plate elements 24 is bonded to the positive current collector 21 via the conductive bonding layer 23. Thereafter, a composite of the positive current collector 21 and the positive active material plate 22 (i.e., the active material plate elements 24) is laminated on the first sheet portion 65 and bonded to the first sheet portion 65 via the positive bonding layer 63 so as to form a positive electrode assembly 20. Note that one end of one of the terminals 7 is fixed to the positive current collector 21 in advance by welding.

On the other hand, the negative current collector 31 (copper foil with a thickness of 10 µm) is coated with the negative active material layer 32 (a carbon layer with a thickness of 130 µm). The negative active material layer 32 is a carbon coating film that includes a mixture of graphite serving as an active material and PVDF serving as a binder. Then, a composite of the negative current collector 31 and the negative active material layer 32 is laminated on the second sheet portion 66 and bonded to the second sheet portion 66 via the negative bonding layer 64 so as to form a negative electrode assembly 30. Note that one end of one of the terminals 7 is fixed to the negative current collector 31 in advance by welding.

As the separator 4, a porous polyimide membrane (TOKS-8023i2 produced by TOKYO OHKA KOGYO CO., LTD.) is prepared. Then, an intermediate laminate 10 is formed by laminating the positive electrode assembly 20, the separator 4, and the negative electrode assembly 30 in order such that the positive active material plate 22 and the negative active material layer 32 face the separator 4. In the intermediate laminate 10, both of the upper and lower surfaces are covered with the cell case 6 (i.e., the first sheet portion 65 and the second sheet portion 66), and the first sheet portion 65 and the second sheet portion 66 extend around the positive electrode assembly 20, the separator 4, and the negative electrode assembly 30. The positive electrode assembly 20, the separator 4, and the negative electrode assembly 30 (hereinafter, also collectively referred to as a "cell element 15") have a thickness of 0.33 mm in the up-down direction. The cell element 15 has a generally rectangular shape with dimensions of 2.3 cm × 3.2 cm in plan view.

Then, three of the four sides of the generally rectangular intermediate laminate 10 are bonded and sealed by heat seal. In the example illustrated in Fig. 10A, three sides except one side on the upper side in the drawing are sealed. These three sides include one side on which the two terminals 7 protrude. To seal the three sides, a pressing jig adjusted to have a sealing width of 2 mm is used, and the outer peripheral portion of the intermediate laminate 10 is heated at 200°C and pressurized with a pressure of 1.5 megapascals (MPa) for 10 seconds. Accordingly, the first sheet portion 65 and the second sheet portion 66 are bonded together by heat seal in the pair of second regions 682 and in the region excluding one of the first regions 681 corresponding to the side that is not sealed, out of the above-described outer peripheral region 68 of the cell case 6 (see Fig. 6).

After the sealing of these three sides, the intermediate laminate 10 is placed in a vacuum drier 81 and subjected to moisture removal and drying using adhesives (i.e., the positive bonding layer 63, the negative bonding layer 64, and the conductive bonding layer 23). At this time, the gas between the second regions 682 is removed on the one sealed side on the lower side in the drawing. Accordingly, in these second regions 682, the first sheet portion 65 and the second sheet portion 66 are brought into contact with each other without contact or into close proximity to each other with slight voids therebetween.

Next, the intermediate laminate 10 is placed in a glove box 82 as illustrated in Fig. 10B. Then, on the one side of the intermediate laminate 10 that is not sealed, an impregnator 83 is inserted between the first sheet portion 65 and the second sheet portion 66, and the electrolytic solution 5 is injected into the intermediate laminate 10 through the impregnator 83. The electrolytic solution 5 is a liquid obtained by dissolving LiBF₄ in a mixed solvent that contains EC and GBL in a volume ratio of 1:3 so as to have an LiBF₄ concentration of 1.5 mol/L and by further adding VC as an additive so as to have a VC concentration of 5 % by weight.

When the injection of the electrolytic solution 5 has ended, the aforementioned one side that is not sealed is tentatively sealed with a simple sealer in a reduced atmosphere with an absolute pressure of 5 kPa in the glove box 82 (i.e., sealing under reduced pressure). Then, the intermediate laminate 10 is initially charged and aged for 7 days. After the aging is completed, portions of the first sheet portion 65 and the second sheet portion 66 that are in the vicinity of the outer edge of the tentatively sealed one side (i.e., the end that does not contain the cell element 15) are removed to remove gases including moisture or the like generated by the aging (i.e., degassing).

After the degassing is completed, the side formed by the aforementioned removal is bonded and sealed by heat seal in a reduced atmosphere with an absolute pressure of 5 kPa in the glove box 82. As in the case of the aforementioned sealing of the three sides, a pressing jig adjusted to have a sealing width of 2 mm is used in this sealing, and the first sheet portion 65 and the second sheet portion 66 are heated at 200°C and pressurized with a pressure of 1.5 MPa for 10 seconds. Accordingly, in the first region 681 on the one side on the upper side in the drawing out of the aforementioned outer peripheral region 68 of the cell case 6 (see Fig. 6), the first sheet portion 65 and the second sheet portion 66 are bonded together by heat seal, and the lithium secondary cell 1 is formed. Moreover, in the second region 682 on this one side on the upper side in the drawing, the first sheet portion 65 and the second sheet portion 66 come in contact with each other without contact or come in close proximity to each other with slight voids therebetween. Thereafter, redundant outer peripheral portions of the cell case 6 are removed to adjust the shape of the lithium secondary cell 1. In the case of manufacturing the lithium secondary cells 1 illustrated in Figs.7 to 9, the folded portion 695 of the cell case 6 is folded back along the folding line 693. In plan view, the lithium secondary cell 1 has a rectangular shape with dimensions of 38 mm × 27 mm and has a thickness less than or equal to 0.45 mm and a capacity of 30 mAh.

In the lithium secondary cell 1 manufactured by the aforementioned manufacturing method, the primary particles in the positive active material plate 22 (i.e., LiCoO₂ sintered plate) have an average orientation angle of 16°. This average orientation angle is measured as follows. First, the above-described LiCoO₂ sintered plate is grinded by a cross-section polisher (CP) (IB-15000CP produced by JEOL Ltd.), and a resultant section (i.e., a section perpendicular to the main surface of the LiCoO₂ sintered plate) is measured by EBSD at a 1000x magnification with a field of view of 125 µm × 125 µm so as to obtain an EBSD image. This EBSD measurement is conducted using a Schottky field emission scanning electron microscope (model: JSM-7800F produced by JEOL Ltd.). Then, for every particle identified in the resultant EBSD image, the angle formed by the

(003) plane of the primary particle and the main surface of the LiCoO₂ sintered plate (i.e., the inclination of crystal orientation from the (003) plane) is obtained as an inclination angle, and an average value of these angles is assumed to be the average orientation angle of the primary particles.

As described above, the LiCoO₂ sintered plate has a plate thickness of 90 µm. This plate thickness is measured by grinding the LiCoO₂ sintered plate using a cross-section polisher (CP) (IB-15000CP produced by JEOL Ltd.) and observing a resultant section by SEM (JSM6390LA produced by JEOL Ltd.). Note that the aforementioned thickness of the dried LiCoO₂ green sheet is also measured in the same manner.

The LiCoO₂ sintered plate has a porosity of 30%. This porosity is measured as follows. The LiCoO₂ sintered plate is grinded by a cross-section polisher (CP) (IB-15000CP produced by JEOL Ltd.), and a resultant section is observed at a 1000x magnification with a field of view of 125 µm × 125 µm by SEM (JSM6390LA produced by JEOL Ltd.). A resultant SEM image is subjected to image analysis, and the porosity (%) is calculated by dividing a total area of all the pores by the area of the LiCoO₂ sintered plate and multiplying the obtained value by 100.

The LiCoO₂ sintered plate has a mean pore diameter of 0.8 µm. This mean pore diameter is measured by mercury porosimetry using a mercury porosimeter (AutoPore IV9510 produced by Shimadzu Corporation).

As described above, either cold lamination or hot lamination is conducted in order to mount the lithium secondary cell 1 on a smart card, the cold lamination being a process in which pressure is applied at ordinary temperature to the lithium secondary cell 1 sandwiched between card base materials, and the hot lamination being a process in which heat and pressure are applied to the lithium secondary cell 1 sandwiched between card base materials. In this way, with the pressure applied in the up-down direction to the lithium secondary cell 1 during manufacture of the target device, the covering region 67 is compressed in the up-down direction, and part of the electrolytic solution 5 between the first sheet portion 65 and the second sheet portion 66 in the covering region 67 is squeezed out to surroundings of the covering region 67.

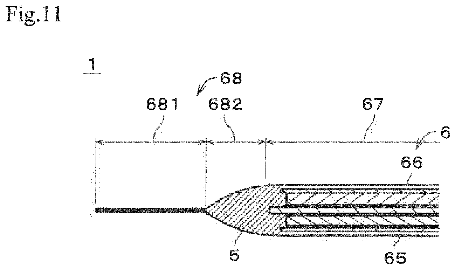

The electrolytic solution 5 squeezed out of the covering region 67 flows in between the first sheet portion 65 and the second sheet portion 66, which are in contact with each other without being bonded together or in close proximity to each other, and causes the first sheet portion 65 and the second sheet portion 66 to be separated from each other in the up-down direction as illustrated in Fig. 11. The electrolytic solution 5 is then kept in the space formed between the first sheet portion 65 and the second sheet portion 66 in the second regions 682.

This prevents or suppresses the electrolytic solution 5 from entering in between the first sheet portion 65 and the second sheet portion 66 bonded together in the first regions 681 and delaminating the first sheet portion 65 and the second sheet portion 66. As a result, it is possible to prevent or suppress degradation in sealing performance of the cell case 6 and leakage of the electrolytic solution 5 from between the first sheet portion 65 and the second sheet portion 66. Note that, when the pressure applied to the lithium secondary cell 1 is eliminated, most of the electrolytic solution 5 that has been diffused to the second region 682 returns to the covering region 67 due to capillarity or other effect. The same applies to the aforementioned lithium secondary cells 1 (see Figs. 7 to 9) in which the outer peripheral region 68 is folded back along the folding line 693.

On the other hand, if there is no second region 682 between the covering region 67 of the cell case 6 and the first regions 681 or if the width of the second regions 682 is excessively small, the electrolytic solution 5 squeezed out of the covering region 67 may enter in between the first sheet portion 65 and the second sheet portion 66 bonded together in the first regions 681 and may delaminate the first sheet portion 65 and the second sheet portion 66. Moreover, the electrolytic solution 5 may leak out of the lithium secondary cell 1 from between the delaminated first and second sheet portions 65 and 66. In particular, when the lithium secondary cell 1 is mounted on a smart card or the like by hot lamination, a phenomenon such as thermal expansion of the electrolytic solution 5 will also occur, and the volume of the electrolytic solution 5 squeezed out of the covering region 67 tends to increase. This increases the possibility of degradation in sealing performance of the cell case 6 and leakage of the electrolytic solution to outside the lithium secondary cell 1.

Furthermore, if the width of the second regions 682 is extremely large, the areas of the positive active material plate 22 and the negative active material layer 32 will decrease because the entire size of the lithium secondary cell 1 is limited to some extent. This may cause degradation in cell characteristics. Specifically, rate capability and cycling performance of the lithium secondary cell 1 may degrade.

Next, the relationship of the width of the second regions 682 and the cell characteristics (i.e., rate capability and cycling performance) of the lithium secondary cell 1 will be described.

**Table 1**

| | Second-Region Width A1 | Active Material-Region Width B3 | A1/B3 | Leakage | Rate Capability | Cycling Performance |
|---|---|---|---|---|---|---|
| | (mm) | (mm) | | | (%) | (%) |
| Comparative Example 1 | 0.01 | 25 | 0.0004 | Yes | 71 | 94 |
| Comparative Example 2 | 0.1 | 25 | 0.0040 | Yes | 73 | 93 |
| Comparative Example 3 | 0.1 | 15 | 0.0067 | Yes | 72 | 91 |
| Example 1 | 0.3 | 15 | 0.02 | No | 71 | 91 |
| Example 2 | 0.5 | 25 | 0.02 | No | 73 | 93 |
| Example 3 | 1 | 25 | 0.04 | No | 70 | 94 |
| Example 4 | 5 | 25 | 0.2 | No | 71 | 94 |
| Example 5 | 25 | 25 | 1.0 | No | 71 | 94 |
| Example 6 | 15 | 15 | 1.0 | No | 70 | 90 |
| Comparative Example 4 | 30 | 25 | 1.2 | No | 55 | 49 |

In the table, A1/B3 indicates the value obtained by dividing the second-region width A1 by the active material-region width B3 described above. In other words, A1/B3 is the proportion of the second-region width A1 to the active material-region width B3. The value of A1/B3 differs among Comparative Examples 1 to 3, Examples 1 to 6, and Comparative Example 4. In Comparative Example 1 to 3, Examples 1 to 6, and Comparative Example 4, the first regions 681 have a width of 2 mm.

Leakage in the table indicates the presence or absence of leakage of the electrolytic solution 5 when processing almost similar to the hot lamination described above is performed on the lithium secondary cell 1. Specifically, the lithium secondary cell 1 is pressurized with a pressure of 3 MPa in the up-down direction by a heating plate heated to 135°C, and a visual inspection is made to determine the presence or absence of leakage of the electrolytic solution 5 to outside the lithium secondary cell 1.

Rate capability in the table indicates the capacity ratio (%) obtained by dividing a second capacity by a first capacity described below. The first capacity refers to the capacity calculated by charging the lithium secondary cell 1 up to 4.2V at a charge rate of 0.2C and then discharging the lithium secondary cell 1 down to 3.0V at a discharge rate of 0.2C. The second capacity refers to the capacity calculated by charging the lithium secondary cell 1 up to 4.2V at a charge rate of 0.2C and then discharging the lithium secondary cell 1 down to 3.0V at a charge rate of 1.0C. Cycling performance in the table indicates the value (%) obtained by repeating 300 times the process of charging the lithium secondary cell 1 up to 4.2V at a charge rate of 0.5C and then discharging the lithium secondary cell 1 down to 3.0V at a discharge rate of 0.5C, and then by dividing the capacity of the lithium secondary cell 1 after the repetition by the capacity of the lithium secondary cell 1 before the repetition.

In Comparative Examples 1 to 3, A1/B3 is less than 0.0067. In Examples 1 to 6, A1/B3 is in the range of 0.02 to 1.0. In Comparative Example 4, A1/B3 is 1.2. In Comparative Examples 1 to 3, leakage of the electrolytic solution 5 has occurred. In Examples 1 to 6 and Comparative Example 4, on the other hand, leakage of the electrolytic solution 5 has not occurred. In Comparative Examples 1 to 3 and Examples 1 to 6, the rate capability is in the range of 70% to 73%, and the cycling performance is in the range of 90% to 94%. In Comparative Example 4, on the other hand, the rate capability is 55% and low, and the cycling performance is 49% and low.

As described above, the lithium secondary cell 1 includes the positive electrode 2, the separator 4, the negative electrode 3, the electrolytic solution 5, the cell case 6, and the two terminals 7. The separator 4 is arranged on the positive electrode 2 in a predetermined direction of superposition. The negative electrode 3 is arranged on the separator 4 on the side opposite to the positive electrode 2 in the direction of superposition. The positive electrode 2, the negative electrode 3, and the separator 4 are impregnated with the electrolytic solution 5. The cell case 6 includes the two-layer sheet portions (i.e., the first sheet portion 65 and the second sheet portion 66) that cover the positive electrode 2 and the negative electrode 3 from both sides in the direction of superposition. The cell case 6 is a sheet-like rectangular member that houses herein the positive electrode 2, the separator 4, the negative electrode 3, and the electrolytic solution 5. The two terminals 7 are connected respectively to the positive electrode 2 and the negative electrode 3 in the cell case 6. The two terminals 7 extend to outside the cell case 6.

The cell case 6 includes the covering region 67 and the outer peripheral region 68. The covering region 67 is a rectangular region overlaid on the positive electrode 2, the separator 4, and the negative electrode 3 in the direction of superposition. The outer peripheral region 68 is a rectangular frame-like region surrounding the covering region 67. The outer peripheral region 68 includes the first regions 681 and the second regions 682. The first regions 681 are band-like regions that extend respectively along the pair of sides (i.e., the pair of long sides 691) other than the side on which the two terminals 7 are arranged. In the first regions 681, the two-layer sheet portions (i.e., the first sheet portion 65 and the second sheet portion 66) described above are bonded together. The second regions 682 are band-like regions extending along the covering region 67 between the covering region 67 and at least one of the pair of first regions 681. In the second regions 682, the two-layer sheet portions (i.e., the first sheet portion 65 and the second sheet portion 66) described above are in contact with each other without being bonded together or in close proximity to each other.

With this configuration, when the electrolytic solution 5 in the lithium secondary cell 1 is squeezed out of the covering region 67 into the outer peripheral region 68, the first sheet portion 65 and the second sheet portion 66 in the second regions 682 are separated from each other so as to allow the electrolytic solution 5 to be stored in the space formed therebetween. Accordingly, it is possible to suppress delamination of the first regions 681 (i.e., delamination of the first sheet portion 65 and the second sheet portion 66 in the first regions 681) caused by the electrolytic solution 5 squeezed out of the covering region 67. It is also possible to suppress leakage of the electrolytic solution 5 to outside the lithium secondary cell 1.

As described above, the value obtained by dividing the second-region width A1 serving as a dividend by the active material-region width B3 serving as a divisor is preferably greater than or equal to 0.02 and less than or equal to 1. When the positive active material width, which is the width of the active material region of the positive electrode 2 in the width direction perpendicular to the pair of long sides 691, and the negative active material width, which is the width of the active material region of the negative electrode 3, are different widths, the active material-region width B3 is the smaller one of the positive active material width and the negative active material width, and when the positive active material width and the negative active material width are the same width, the active material-region width B3 is either of the positive active material width and the negative active material width. When there is only one second region 682 between the covering region 67 and one of the pair of first regions 681, the second-region width A1 is the width of this one second region 682, and when there is a pair of second regions 682 between the covering region 67 and both of the pair of first regions 681, the second-region width A1 is the total width of the pair of second regions 682. This prevents leakage of the electrolytic solution 5 from the lithium secondary cell 1 and prevents or suppresses degradation in cell characteristics (i.e., rate capability and cycling performance) as illustrated in Examples 1 to 6 in Table 1.

In the lithium secondary cell 1, as illustrated in Figs. 7 to 9, at least one first region 681 described above is preferably folded back in the width direction along the folding line 693 extending in parallel with the pair of long sides 691. This reduces the size (so-called footprint) of the lithium secondary cell 1 in plan view. As a result, it is possible to reduce the size of the target device on which the lithium secondary cell 1 is mounted or to reduce the space for mounting the lithium secondary cell 1 in the target device.

The folding line 693 is preferably positioned at the center of at least one first region 681 described above in the width direction, or on the side opposite to the second region 682 from the center of at least one first region 681 described above in the width direction (see Figs. 7 and 8). With this configuration, the folded portion 695 does not overlap with the second regions 682 in the up-down direction, and therefore it is possible to prevent expansion of the second region 682 from being inhibited by the folded portion 695 when the electrolytic solution 5 squeezed out of the covering region 67 flows into the second regions 682. Accordingly, the second regions 682 can expand favorably and can favorably keep therein the electrolytic solution 5 described above.

The folding line 693 is preferably positioned between the center of at least one first region 681 described above in the width direction and a second region 682 (see Fig. 9). With this configuration, the folded portion 695 can be folded back inward in the width direction to a position at which the folded portion 695 overlaps with the second region 682 in the up-down direction. As a result, it is possible to further reduce the size (so-called footprint) of the lithium secondary cell 1 in plan view.

As described above, the positive electrode 2 preferably includes the sheet-like current collector having conductivity (i.e., the positive current collector 21) and the active material plate that is a plate-like ceramic sintered body containing a lithium composite oxide (i.e., the positive active material plate 22). This further improves the above-described cell characteristics of the lithium secondary cell 1.

More preferably, the positive active material plate 22 of the positive electrode 2 has a structure in which primary particles having a layered rock-salt structure are coupled together. These primary particles preferably have an average inclination angle greater than 0° and less than or equal to 30°. The average inclination angle is an average value of the angles formed by the (003) planes of the primary particles and the main surface of the positive active material plate 22. Accordingly, it is possible to reduce a situation where the internal stress of the positive active material plate 22 produced by expansion and contraction of crystal lattices accompanying the cycle of charging and discharging is applied to the main surface of the positive active material plate 22 that faces the conductive bonding layer 23 and the positive current collector 21.

In this way, the interval stress produced by expansion and contraction of crystal lattices is made less likely to be applied to the main surface of the positive active material plate 22 that comes in contact with the conductive bonding layer 23. This suppresses a reduction in the strength of bonding between the positive active material plate 22 and the positive current collector 21. As a result, it is possible to improve the stability of voltage during charging and discharging of the lithium secondary cell 1.

The lithium secondary cell 1 described above is thin, but can suppress leakage of the electrolytic solution 5 to outside the lithium secondary cell 1 caused by the application or pressure or other processing. Accordingly, the lithium secondary cell 1 is particularly suitable for use as a power supply source of a thin device that is relatively easy to deform, i.e., a sheet-like device or a device having flexibility (e.g., a smart card).

As described above, the lithium secondary cell 1 can suppress leakage of the electrolytic solution 5 and is therefore particularly suitable for use as a power supply source of a target device that undergoes the process in which the electrolytic solution 5 is squeezed out of the covering region 67 during manufacture, i.e., a target device that undergoes the process of applying pressure while applying heat during manufacture.

The lithium secondary cell 1 described above may be modified in various ways.

For example, second-region width A1/active material-region width B3 may be less than 0.02 as long as it is greater than 0. Alternatively, second-region width A1/active material-region width B3 may be greater than 1. In either case, it is possible to suppress leakage of the electrolytic solution 5 to outside the lithium secondary cell 1.

In the examples illustrated in Figs. 7 to 9, the folding line 693 is positioned on the first regions 681, but the folding line 693 may be positioned on the second regions 682. In this case, part of the folded portion 695 (i.e., the inward end in the width direction) may overlap with the covering region 67 in the up-down direction.

In the examples illustrated in Figs. 7 to 9, the folded portion 695 is folded back approximately 180° along the folding line 693, but the folding angle may be less than 180°. The folding angle as used herein refers to the angle formed by the folded portion 695 before the folding and the folded portion 695 after the folding in a sectional view as illustrated in Figs. 7 to 9. The folding angle is preferably greater than or equal to 90° and less than or equal to 180°.

In the examples illustrated in Figs. 7 to 9, the folded portion 695 is folded back only once along the folding line 693, but the number of times the folded portion 695 is folded back may be two or more. For example, outward portions of the first regions 681 in the width direction may be folded back inward in the width direction multiple times so as to form a folded portion 695 having a scroll shape in cross section.

As described above, the second regions 682, in which the first sheet portion 65 and the second sheet portion 66 of the cell case 6 are in contact with each other without being bonded together or in close proximity to each other, are provided along the long sides 691 of the cell case 6 adjacent to the short side on which the two terminals 7 are provided, but may be provided along the side other than the long sides 691 (i.e., another short side parallel to the short side on which the two terminals 7 are provided).

The two terminals 7 do not necessarily have to extend to outside the cell case 6 from one side of the cell case 6, and may extend to outside the cell case 6 respectively from a pair of sides parallel to each other.

The structure of the positive active material plate 22 of the positive electrode 2 may be modified in various ways. For example, the average inclination angle of the primary particles with a layered rock-salt structure in the positive active material plate 22 may be greater than 30° and may be 0°. Alternatively, the primary particles may have a structure other than the layered rock-salt structure.

The positive electrode 2 may be a coating electrode in which the positive current collector 21 is coated with a positive active material that contains a binder composed primary of resin and a positive active material layer.

The lithium secondary cell 1 may be used as a power supply source of a device having flexibility other than a smart card (e.g., card-type device) or a sheet-like device (e.g., a wearable device provided on clothes or the like or a body-mounted device). The lithium secondary cell 1 may also be used as a power supply source of any of various targets (e.g., an IoT module) other than the devices described above.

The configurations of the above-described preferred embodiments and variations may be appropriately combined as long as there are no mutual inconsistencies.

While the invention has been shown and described in detail, the foregoing description is in all aspects illustrative and not restrictive. It is therefore to be understood that numerous modifications and variations can be devised without departing from the scope of the invention.

### Industrial Applicability

The lithium secondary cell according to the present invention is applicable in various fields using lithium secondary cells, such as being used as, for example, a power supply source of a smart card having an arithmetic processing function.

### Reference Signs List

- 1: Lithium secondary cell
- 2: Positive electrode
- 3, 3a: Negative electrode
- 4: Separator
- 5: Electrolytic solution
- 6: Cell case
- 7: Terminal
- 21: Positive current collector
- 22: Positive active material plate
- 32: Negative active material layer
- 32a: Negative active material plate
- 65: First sheet portion
- 66: Second sheet portion
- 67: Covering region
- 68: Outer peripheral region
- 681: First region
- 682: Second regions
- 691: Long side
- 693: Folding line

## Claims

1. A thin lithium secondary cell comprising:
a positive electrode;
a separator arranged on said positive electrode in a predetermined direction of superposition;
a negative electrode arranged on said separator on a side opposite to said positive electrode in said direction of superposition;
an electrolytic solution with which said positive electrode, said negative electrode, and said separator are impregnated;
a sheet-like rectangular cell case that includes two-layer sheet portions covering said positive electrode and said negative electrode from both sides in said direction of superposition, and that houses therein said positive electrode, said separator, said negative electrode, and said electrolytic solution; and
two terminals connected respectively to said positive electrode and said negative electrode in said cell case and extending to outside said cell case,
wherein said cell case includes:
a rectangular covering region overlaid on said positive electrode, said separator, and said negative electrode in said direction of superposition; and
a rectangular frame-like outer peripheral region surrounding said covering region, and
said outer peripheral region includes:
a pair of first regions bonded to said two-layer sheet portions, the pair of first regions being band-like regions extending respectively along a pair of sides other than a side on which said two terminals are arranged; and
a second region that is in contact with or in close proximity to said two-layer sheet portions without being bonded thereto, the second region being a band-like region extending along said covering region between said covering region and at least one first region out of said pair of first regions.

2. The lithium secondary cell according to claim 1, wherein
when a positive active material width and a negative active material width are different widths, the positive active material width being a width of an active material region of said positive electrode in a width direction perpendicular to said pair of sides, and the negative active material width being a width of an active material region of said negative electrode in the width direction, a smaller one of said positive active material width and said negative active material width is used as a divisor, and when said positive active material width and said negative active material width are the same width, either of said positive active material width and said negative active material width is used as a divisor,
when said second region is present only between said covering region and one first region out of said pair of first regions, a width of said second region is used as a dividend, and when a pair of second regions, each being said second region, is present between said covering region and both of said pair of first regions, a total width of said pair of second regions is used as a dividend, and
a value obtained by dividing said dividend by said divisor is greater than or equal to 0.02 and less than or equal to 1.

3. The lithium secondary cell according to claim 1 or 2, wherein
said at least one first region is folded back in a width direction along a folding line extending parallel to said pair of sides.

4. The lithium secondary cell according to claim 3, wherein
said folding line is positioned either at a center of said at least one first region in the width direction or on a side opposite to said second region from the center of said at least one first region in the width direction.

5. The lithium secondary cell according to claim 3, wherein
said folding line is positioned between said second region and a center of said at least one first region in the width direction.

6. The lithium secondary cell according to any one of claims 1 to 5, wherein
said positive electrode includes:
a sheet-like current collector having conductivity; and
an active material plate that is a plate-like ceramic sintered body containing a lithium composite oxide.

7. The lithium secondary cell according to claim 6, wherein
said active material plate has a structure in which primary particles having a layered rock-salt structure are coupled together,
said primary particles have an average inclination angle greater than 0° and less than or equal to 30°, and
said average inclination angle is average value of angles formed by (003) planes of said primary particles and a main surface of said active material plate.

8. The lithium secondary cell according to any one of claims 1 to 7, being used as a power supply source of a sheet-like device or a device having flexibility.

9. The lithium secondary cell according to claim 8, being used as a power supply source of a smart card that is said device having flexibility.

10. The lithium secondary cell according to any one of claims 1 to 9, being used as a power supply source of a target device that undergoes a process of applying pressure while applying heat during manufacture.
